# FASCICULE DE BREVET EUROPEEN

(11) **EP 2 371 634 B1**
(45) Date de publication et mention de la délivrance du brevet: **25.12.2019**
(21) Numéro de dépôt: 11160165.4
(22) Date de dépôt: 29.03.2011
(51) Int. Cl.: B60S 1/40

(54) **Bras et balai d'essuie-glace à détrompeurs**
Scheibenwischerarm und -blatt mit Unverwechselbarkeitseinrichtungen.
Windscreenwiper arm and blade with foolproofs plugs

(30) Priorité: 31.03.2010 FR 1001343
(43) Date de publication de la demande: 05.10.2011
(73) Titulaire: Valeo Systèmes d'Essuyage, 78322 Le Mesnil Saint Denis (FR)
(72) Inventeur: Picot, Philippe, 63000, Les Pradeaux (FR)
(74) Mandataire: Callu-Danseux, Violaine

(56) Documents cités:
- DE-A1- 10 130 903
- DE-A1- 10 320 930
- DE-A1- 10 347 637
- US-A1- 2009 064 438

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un nettoyage et/ou lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions le balai est rattaché au bras tournant de l'essuie-glace par un ensemble constitué d'un connecteur et d'un adaptateur. Le connecteur est une pièce qui est sertie directement sur la lame racleuse ou directement sur la flat blade alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

On distingue globalement deux cinématiques d'essuie-glaces, selon que leurs bras du côté du conducteur ou du côté du passager avant, tournent dans le même sens (bras parallèles) ou dans des sens opposés (bras antagonistes). Dans le premier cas, les extrémités des bras sont réalisés de façon identiques alors que dans le second cas elles ont des formes symétriques, en miroir l'une de l'autre. Si les balais et les connecteurs peuvent être les mêmes pour les deux types d'essuie-glaces, les adaptateurs doivent être configurés en fonction du bras (bras côté conducteur / bras côté passager) auquel ils sont destinés.

En particulier les adaptateurs destinés à être montés sur des bras antagonistes sont réalisés sous une forme miroir de ceux destinés à être montés sur des bras parallèles. Leur réalisation nécessite donc la mise au point d'un moule d'injection spécifique à chaque essuie-glace qui est le miroir de celui utilisé pour l'autre essuie-glace. Dans le cas des bras parallèles la fabrication des moules d'injection est plus simple car un seul moule pourrait a priori suffire à produire les adaptateurs pour les deux essuie-glaces.

Cependant, dans ce cas des bras parallèles, les balais ne sont pas toujours identiques car les longueurs peuvent varier entre un balai destiné au côté conducteur et un balai destiné au côté passager. Il est alors possible d'intervertir les essuie-glaces et de les monter à une place pour laquelle ils ne sont pas adaptés. Bien qu'ils fonctionneront apparemment normalement, les balais ne balayeront pas la bonne surface, ce qui se traduira, d'un côté, par une couronne non balayée et, de l'autre, par un possible débordement du balai sur les montants du véhicule entourant le pare-brise. Au final le conducteur observera un fonctionnement défectueux de son essuie-glace sans être conscient que cela provient d'un mauvais montage.

Lors de la production des essuie-glaces, le balai est monté en usine sur le connecteur et celui-ci est ensuite assemblé sur l'adaptateur par des machines fonctionnant automatiquement. Il y a donc un appariement correct des balais et des connecteurs avec des adaptateurs appropriés à leur sens de montage. L'ensemble des trois éléments balai-connecteur-adaptateur est ensuite livré, tout assemblé, au constructeur automobile pour le montage sur les véhicules neufs, et à des revendeurs pour les essuie-glaces de remplacement. Si le constructeur ou un employé d'un garage automobile sait prendre les mesures qu'il faut pour éviter les mauvais montages il n'en est pas de même, dans le cas d'essuie-glaces pour des bras parallèles, pour un conducteur individuel qui n'a pas forcément connaissance de l'existence d'une différence de forme entre les essuie-glaces à monter du côté conducteur et ceux à monter du côté du passager avant.

Il importe donc de faire en sorte qu'il ne soit pas possible de monter du côté conducteur un essuie-glace qui est fabriqué pour le côté passager et inversement.

On connaît du document DE 103 47 637 un ensemble selon le préambule de la revendication 1.

On connaît aussi des essuie-glaces pour lesquels des détrompeurs sont mis en place sous la forme d'un chanfrein réalisé à l'extrémité du bras, mais ceux-ci n'interdisent qu'une seule des deux inversions qui sont possibles au montage. Si le bras non chanfreiné ne peut accueillir un balai présentant un triangle protubérant, un bras chanfreiné peut accueillir un balai ne présentant pas de triangle protubérant. Le risque d'un mauvais montage d'un balai persiste donc. De plus ces formes conjuguées sont visibles extérieurement et les deux essuie-glaces ne sont pas visuellement identiques, ce qui nuit à l'esthétique de l'ensemble.

La présente invention a pour but de remédier à ces inconvénients.

A cet effet, l'invention a pour objet un ensemble constitué par un adaptateur formant moyen d'attache d'un balai d'essuie-glace sur un bras d'entraînement d'un système d'essuie-glaces, et d'une chape de support positionnée en extrémité dudit bras et agencée de façon à former un logement pour ledit adaptateur dans sa position de fonctionnement, ladite chape comportant des moyens de support de l'adaptateur, l'adaptateur comprenant un corps coopérant avec lesdits moyens support.

Ladite chape comportant sur un de ses moyens de support au moins un dispositif de blocage en translation dudit adaptateur dans son mouvement vers sa position de fonctionnement, ledit dispositif faisant saillie par rapport audit moyen de support, et ledit adaptateur comportant au moins un moyen formant butée faisant saillie par rapport audit corps, apte à coopérer avec ledit dispositif de blocage dans le cas où l'adaptateur n'est pas conformé pour être monté sur ladite chape et apte à permettre la translation de l'adaptateur jusqu'à sa position de fonctionnement dans le cas où ledit adaptateur est conformé pour être monté sur ladite chape.

La présence de deux éléments faisant saillie assure l'impossibilité de montage d'un mauvais essuie-glace sur un mauvais bras, puisque quelle que soit la configuration relative de la chape et de l'adaptateur, un de ces éléments rencontrera une partie de la pièce opposée et empêchera la progression de l'adaptateur vers sa position de fonctionnement. Le détrompage fonctionne ainsi aussi bien pour empêcher le montage sur le côté conducteur d'un balai prévu pour le côté passager que pour l'inverse.

Avantageusement ledit dispositif de blocage et ladite butée sont positionnées à l'intérieur du volume de la chape, de sorte que, l'adaptateur étant dans sa position de fonctionnement, ils ne soient pas visibles depuis l'extérieur de ladite chape. On assure ainsi une homogénéité visuelle pour les deux essuie-glaces et donc une meilleure esthétique pour l'ensemble.

Selon l'invention, la chape et l'adaptateur ont sensiblement une forme parallélépipédique et les moyens de support de la chape sont des glissières sur lesquelles reposent des faces latérales de l'adaptateur.

Avantageusement ledit dispositif de blocage fait saillie vers l'intérieur de la chape, en direction de la glissière opposée.

Selon l'invention, au moins une des faces latérales de l'adaptateur comporte une extension formant butée s'étendant en-dessous du niveau desdites glissières.

De façon encore plus préférentielle la butée est positionnée à l'extrémité inférieure d'un des piliers formant extrémités longitudinales des faces latérales dudit adaptateur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue générale, en perspective, d'un essuie-glace pour véhicule automobile ;
- la figure 2 est une vue détaillée de la figure 1, montrant la liaison entre le bras et le balai de l'essuie-glace ;
- la figure 3 est une vue en perspective d'un balai tenu par un connecteur et porté par un adaptateur selon un mode de réalisation de l'invention, associé, en mode éclaté, à un bras d'essuie-glace conformé pour recevoir ledit adaptateur ;
- la figure 4 est une vue d'un bras d'essuie-glace et de deux balais selon l'invention, équipés chacun d'un adaptateur destiné respectivement à un essuie-glace pour le côté conducteur et pour le côté passager ;
- la figure 5 est une vue en perspective du bras et de l'adaptateur de la figure 3, l'adaptateur étant monté sur le bras.

Dans la suite de la description les dénominations longitudinales ou latérales se réfèrent à l'orientation du bras sur lequel est monté le balai d'essuie-glace. La direction longitudinale correspond à l'axe principal du bras alors que les orientations latérales correspondent à des orientations perpendiculaires à l'axe du bras et parallèles au pare-brise après montage. Pour les directions longitudinales les dénominations externe ou interne s'apprécient par rapport au centre de rotation du bras de l'essuie-glace. Enfin, les directions référencées comme supérieures ou inférieures correspondent à des orientations perpendiculaires au plan du pare-brise, après montage.

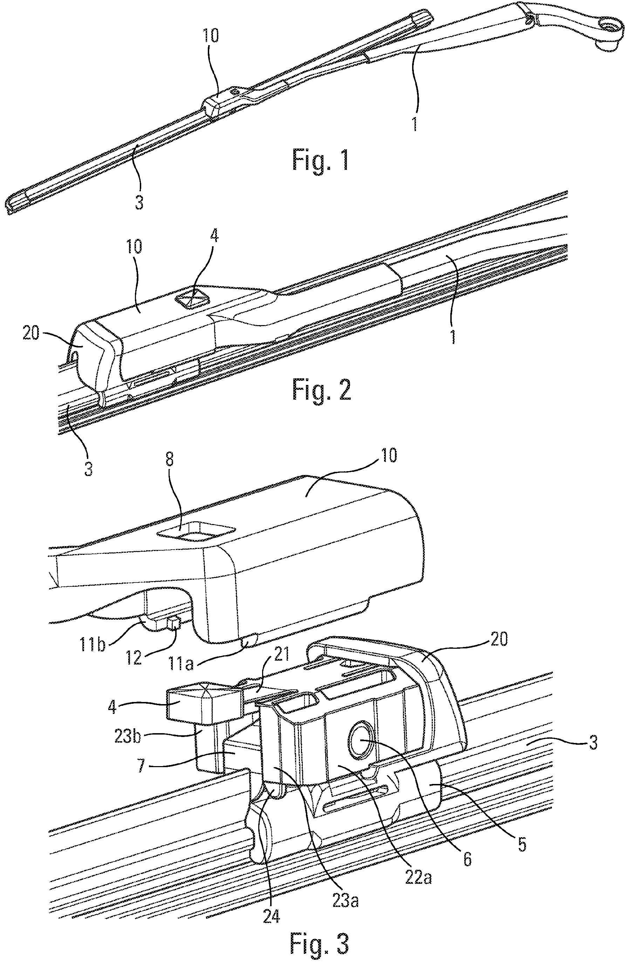

En se référant aux figures 1 et 2, on voit un essuie-glace composé classiquement d'un porte-balai ou bras 1 se terminant à son extrémité externe par une chape 10, qui est couramment fixée par sertissage sur le bras 1 et qui a pour fonction, par l'intermédiaire d'un adaptateur 20, de supporter un balai 3 équipé d'un connecteur 5. L'adaptateur 20 a vocation à s'insérer dans la chape 10 par un mouvement de translation selon un axe longitudinal, pour venir dans sa position de fonctionnement où il est positionné en butée contre une forme coopérante donnée à la chape 10. Il y est alors fixé de façon réversible au moyen d'un bouton escamotable de verrouillage 4, qui coopère avec un évidement pratiqué à cet effet dans la chape 10.

En se référant maintenant à la figure 3 on voit la chape 10, dont la forme est sensiblement celle d'un parallélépipède creux dont les faces externe, interne et inférieure sont ouvertes pour laisser passer l'adaptateur 20 et le connecteur 5 qui lui est attaché. La face inférieure comporte deux glissières 11a et 11b, formant moyens de support pour l'adaptateur, et sur lesquelles vient prendre appui la face inférieure de l'adaptateur 20. Lesdites glissières sont orientées l'une vers l'autre, et donc dissimulées au regard, en position de fonctionnement. La chape 10 comporte par ailleurs un évidement 8 dans sa face supérieure, dans lequel vient se loger le bouton escamotable 4 pour verrouiller l'adaptateur 20 dans sa position de fonctionnement. Une des glissières 11b comporte un becquet 12 faisant saillie vers l'intérieur de la chape, en direction de la glissière opposée 11a.

Les faces latérales de la chape 10 sont identiques l'une à l'autre, au moins dans leur partie d'extrémité externe en contact avec l'adaptateur 20.

L'adaptateur 20 a, lui aussi, sensiblement la forme d'un parallélépipède avec, sur sa face supérieure, une languette élastique 21 qui porte à son extrémité longitudinale le bouton escamotable 4. Les faces latérales 22a et 22b (non visible sur la figure) comportent chacune en leur centre un trou cylindrique par lequel passe un axe transversal 6 lié au connecteur 5. La coopération de l'axe transversal 6 et des trous cylindriques permet une rotation, dans un plan perpendiculaire au pare-brise, du balai 3 par rapport au bras 1, dans la limite d'un débattement angulaire donné. Les deux faces latérales 22 reposent par leurs parties inférieures formant moyens de soutien, sur les glissières 11 de la chape 10. La largeur de la face inférieure de l'adaptateur est inférieure à l'écartement entre les faces latérales intérieures de la chape 10 pour que l'adaptateur puisse s'y insérer, mais supérieure à l'écart existant entre les deux glissières 11a et 11b de façon que celles-ci puissent le porter.

Du côté interne, l'adaptateur 20 comporte, à l'extrémité de ses faces latérales 22, deux piliers 23a et 23b, entre lesquels passe une extension 7 du connecteur 5 qui porte l'axe transversal 6. L'un des piliers 23a comporte une extension vers le bas formant une butée de détrompage 24 qui s'étend verticalement en-dessous du niveau de la glissière 11a de la chape 10, lorsque l'adaptateur 20 est installé dans ladite chape. Cette butée de détrompage n'existe que sur un des piliers, l'autre 23b ne s'étendant verticalement pas en-dessous de la glissière correspondante 11b.

Pour assurer le détrompage et permettre d'associer le bon balai au bon bras d'essuie-glace, la butée 24 est positionnée sur le pilier de l'adaptateur qui ne se trouve pas en face du becquet 12 de la chape sur laquelle doit être monté le balai. A la différence de l'art antérieur qui présente un détrompeur réalisé à l'aide d'un angle saillant placé sur l'adaptateur et d'une partie en creux sur la chape, le fait que, tant le becquet 12 que la butée 24, fassent saillie par rapport aux moyens qui les portent permet un détrompage total, c'est à dire un détrompage qui empêche tout mauvais montage d'un balai sur un mauvais bras. En effet, quelles que soient les configurations relatives de la chape et de l'adaptateur il y aura toujours un élément saillant pour provoquer un blocage et empêcher le montage de l'adaptateur si celui-ci n'est pas correctement conformé pour la chape.

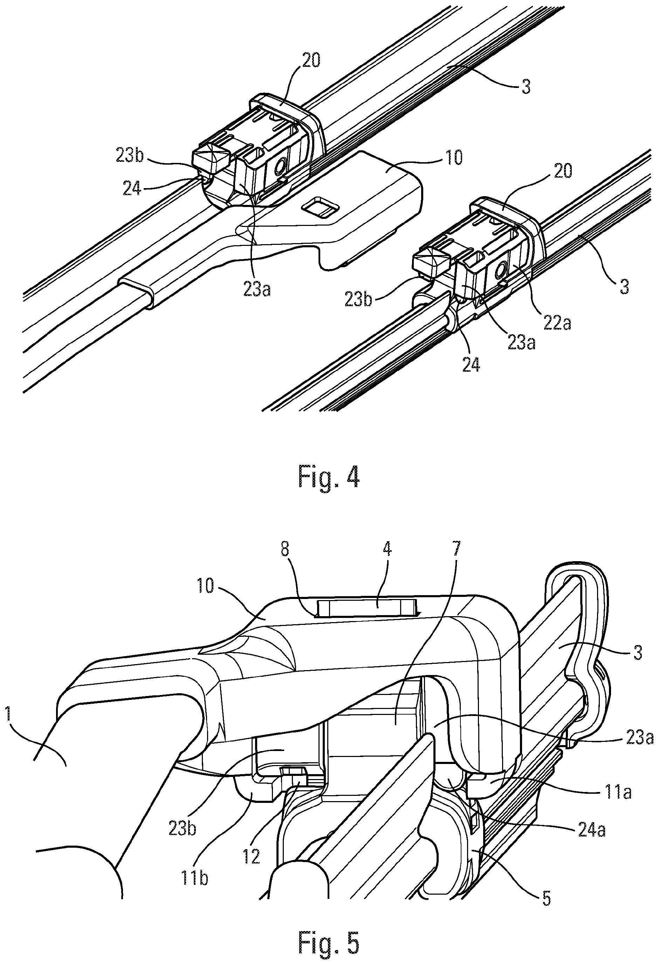

Sur la figure 4 on voit les deux types d'adaptateurs qui sont susceptibles d'être montés sur une chape 10 de bras parallèles. Dans un cas la butée de détrompage est située sur le pilier 23a alors que dans l'autre elle est située sur le pilier opposé 23b. En fonction de la position du becquet 12 (non visible sur la figure) sur les glissières 11 de la chape, l'un ou l'autre des adaptateurs, et un seul des deux, sera susceptible de s'insérer dans la chape 10.

La figure 5 montre un adaptateur 20, correctement positionné dans une chape 10. Du fait que la butée de détrompage 24 n'est pas, située du même côté que le becquet 12 l'adaptateur a pu être déplacé sur les glissières 11 sans rencontrer d'obstacle et atteindre la position recherchée. L'adaptateur est correctement inséré dans le fond de la chape 10 et son avancement a permis au bouton escamotable 4 de venir se placer en face de l'évidement 8 et de s'y insérer sous l'action de la languette élastique 21. A contrario, dans le cas du choix d'un mauvais balai, la butée 24 se serait trouvée du même côté que le becquet 12 et la coopération de ces deux éléments aurait empêché l'enfoncement complet de l'adaptateur 20 dans la chape 10.

On constate également que l'agencement des moyens de support, constitués par les glissières 11, et plus particulièrement celui du becquet 12 et de la butée 24 permet la dissimulation au regard de ces éléments depuis l'extérieur de la chape et génère donc une meilleure esthétique de l'essuie-glace .

On va maintenant décrire l'installation d'un balai d'essuie-glace sur un bras porteur d'une chape selon un mode de réalisation de l'invention, dans le cas d'essuie-glaces à bras parallèles.

Le balai est supposé pré-monté, avec le connecteur serti sur la lame racleuse et emmanché dans un adaptateur 10. Cet adaptateur est muni d'une butée de détrompage 24 qui s'étend à l'extrémité inférieure d'un pilier 23a.

L'opérateur saisit le bras 1 et s'il ne connaît par l'existence d'une différence entre les balais destinés au côté conducteur et au côté passager, amène l'adaptateur 20 en face de la chape 10, sans prendre soin de vérifier la présence ou non d'un becquet sur cette dernière.

Il introduit l'adaptateur 20 dans la chape 10 et le fait glisser sur les glissières 11 en essayant d'atteindre la position d'utilisation.

Dans le cas où l'adaptateur 10 est présenté sur une chape qui n'est pas compatible du balai choisi, la butée 24 va se heurter au becquet 12, qui se trouve de ce fait sur la glissière 11a, et l'opérateur ne pourra pas atteindre la position de verrouillage signalée par l'entrée du bouton escamotable 4 dans l'évidement 8. Dans le cas contraire, le becquet étant situé sur la glissière 11b, la butée 24 ne rencontrera aucun obstacle et la progression de l'adaptateur pourra se poursuivre. L'enclenchement du bouton 4 dans l'évidement 8 assurera le positionnement de l'adaptateur et le maintien du balai sur le bras.

Il est à noter que des variantes de réalisation sont bien sûr possibles. Notamment la chape de support 10, qui est représentée sertie sur le bras 1, peut être réalisée dans la même matière que le bras, en continuité avec lui.

## Revendications

1. Ensemble constitué par un adaptateur (20) formant moyen d'attache d'un balai d'essuie-glace (3) sur un bras (1) d'entraînement d'un système d'essuie-glaces, et d'une chape de support (10) positionnée en extrémité dudit bras et agencée de façon à former un logement pour ledit adaptateur dans sa position de fonctionnement, ladite chape (10) comportant des moyens de support (11a, 11b) de l'adaptateur (20), l'adaptateur comprenant un corps coopérant avec lesdits moyens support (11a, 11b), ensemble dans lequel la chape (10) et l'adaptateur (20) ont sensiblement une forme parallélépipédique et dans lequel les moyens de support de la chape (10) sont des glissières (11a, 11b) sur lesquelles reposent des faces latérales (22a, 22b) de l'adaptateur, ladite chape (10) comportant sur un de ses moyens de support (11b) au moins un dispositif de blocage en translation (12) dudit adaptateur dans son mouvement vers sa position de fonctionnement, ledit dispositif faisant saillie par rapport audit moyen de support, et ledit adaptateur (20) comportant au moins un moyen formant butée (24) faisant saillie par rapport audit corps, apte à coopérer avec ledit dispositif de blocage (12) dans le cas où l'adaptateur (20) n'est pas conformé pour être monté sur ladite chape (10) et apte à permettre la translation de l'adaptateur (20) jusqu'à sa position de fonctionnement dans le cas où ledit adaptateur (20) est conformé pour être monté sur ladite chape (10), ensemble étant **caractérisé en ce que** au moins une des faces latérales (22a) de l'adaptateur (20) comporte une extension formant butée (24) s'étendant en-dessous du niveau desdites glissières (11a, 11b).

2. Ensemble selon la revendication 1 dans lequel ledit dispositif de blocage (12) et ladite butée (24) sont positionnées à l'intérieur du volume de la chape (10), de sorte que, l'adaptateur étant dans sa position de fonctionnement, ils ne soient pas visibles depuis l'extérieur de ladite chape.

3. Ensemble selon la revendication 1 ou 2 dans lequel ledit dispositif de blocage (12) fait saillie vers l'intérieur de la chape, en direction de la glissière opposée (11a).

4. Ensemble selon l'une des revendications 1 à 3 dans lequel la butée (24) est positionnée à l'extrémité inférieure d'un des piliers (23a, 23b) formant extrémités longitudinales des faces latérales (22a, 22b) dudit adaptateur.

## Patentansprüche

1. Anordnung, bestehend aus einem Adapter (20), der ein Mittel zum Befestigen eines Scheinbenwischerblatts (3) an einem Antriebsarm (1) eines Scheibenwischersystems bildet, und einer Stützabdeckung (10), die am Ende des Arms positioniert und angeordnet ist, um ein Gehäuse für den Adapter in seiner Betriebsstellung zu bilden, wobei die Abdeckung (10) Mittel zum Abstützen (11a, 11b) des Adapters (20) umfasst, wobei der Adapter einen Körper umfasst, der mit den Stützmitteln (11a, 11b) zusammenwirkt, Anordnung, in der die Abdeckung (10) und der Adapter (20) eine im Wesentlichen quaderförmige Form aufweisen und in der die Stützmittel der Abdeckung (10) Gleitschienen (11a, 11b) sind, auf denen Seitenflächen (22a, 22b) des Adapters aufliegen, wobei die Abdeckung (10) an einem ihrer Stützmittel (11b) mindestens eine Verschiebeverriegelungsvorrichtung (12) des Adapters in seiner Bewegung in Richtung seiner Betriebsstellung aufweist, wobei die Vorrichtung in Bezug auf das Stützmittel herausragt, und wobei der Adapter (20) mindestens ein Anschlagmittel (24) umfasst, das in Bezug auf den Körper herausragt, das in der Lage ist, mit der Verriegelungsvorrichtung (12) zusammenzuwirken, falls der Adapter (20) nicht so geformt ist, dass er an der Abdeckung (10) montiert werden kann, und das die Verschiebung des Adapters (20) in seine Betriebsstellung ermöglicht, falls der Adapter (20) so geformt ist, dass er an der Abdeckung (10) montiert werden kann, Anordnung, **dadurch gekennzeichnet, dass** mindestens eine der Seitenflächen (22a) des Adapters (20) eine Anschlagsverlängerung (24) aufweist, die sich unterhalb der Ebene der Gleitschienen (11a, 11b) erstreckt.

2. Anordnung nach Anspruch 1, in der die Verriegelungsvorrichtung (12) und der Anschlag (24) innerhalb des Volumens der Abdeckung (10) so positioniert sind, dass sie dann, wenn sich der Adapter in seiner Betriebsstellung befindet, von außen von der Abdeckung nicht sichtbar sind.

3. Anordnung nach Anspruch 1 oder 2, wobei die Verriegelungsvorrichtung (12) in den Innenraum der Abdeckung in Richtung der gegenüberliegenden Gleitschiene (11a) herausragt.

4. Anordnung nach einem der Ansprüche 1 bis 3, bei der der Anschlag (24) am unteren Ende einer der Stützen (23a, 23b) angeordnet ist, die Längsenden der Seitenflächen (22a, 22b) des Adapters bilden.

## Claims

1. Assembly formed by an adapter (20) forming attaching means of a wiper blade (3) on a drive arm (1) of a wiper system, and a support bracket (10) positioned in extremity of said arm and arranged to form a housing for said adapter in its operating position, said bracket (10) having support means (11a, 11b) for supporting the adapter (20), the adapter comprising a body cooperating with said support means (11a, 11b), assembly in which the bracket (10) and the adapter (20) have a substantially parallelepiped shape and in which the support means of the bracket (10) are slides (11a, 11b) on which stand lateral faces (22a, 22b) of the adapter, said bracket (10) comprising, on one of its support means (11b) at least one locking device (12) in translation of said adapter in its movement towards its operating position, said device being protrude with respect to said support means, and said adaptor (20) comprising at least one means forming abutment (24) being protrude with respect to said body, able to cooperate with said locking device (12) in the case where the adaptor (20) is not shaped for being mounted on said bracket (10) and able to allow the translation of the adaptor (20) until its operational position in the case where said adaptor (20) is shaped for being mounted on said bracket (10), the assembly being **characterized in that** at least one of the lateral faces of the adaptor (20) comprises an extension forming abutment (24) extending below the level of said slides (11a, 11b).

2. Assembly according to claim 1 in which said locking device (12) and said abutment (24) are positioned within the volume of the bracket (10), such that the adaptor (20) is in its operational position, and they are not visible from outside of said bracket (10).

3. Assembly according to claim 1 or 2 in which said locking device (12) is protrude towards the interior of the bracket (10), in the direction of the opposite slide (11a).

4. Assembly according to any one of claims 1 to 3 in which the abutment (24) is located in the inferior end of one of the pillars (23a, 23b) forming longitudinal ends of the lateral faces (22a, 22b) of said adaptor (20).
